# EUROPÄISCHE PATENTANMELDUNG

(11) **EP 4 742 514 A1**
(43) Veröffentlichungstag der Anmeldung: **13.05.2026**
(21) Anmeldenummer: 25195344.4
(22) Anmeldetag: 12.08.2025
(51) Int. Cl.: H02K 19/10, H02K 41/06, B64C 27/28, B64C 29/00

(54) **LUFTFAHRZEUG MIT LEISTUNGSSTARKER ANTRIEBSEINHEIT**

(30) Priorität: 12.11.2024 DE 202024002149 U
(71) Anmelder: Eisenmann, Siegfried A., 88326 Aulendorf (DE)
(72) Erfinder: Eisenmann, Siegfried A., 88326 Aulendorf (DE)
(74) Vertreter: Kaminski Harmann

(57) **Zusammenfassung**

Die vorliegende Erfindung betrifft eine Antriebseinheit 300 für einen Propeller 303 eines zum Vertikalflug und zum Horizontalflug geeigneten Luftfahrzeugs 307. Die Antriebseinheit 300 weist dabei einen ersten Elektromotor 100 ausgebildet zur Rotation des Propellers 303 und ein erstes Exzentergetriebe 104 zur Wirkverbindung zwischen dem Propeller 303 und dem ersten Elektromotor 100 auf. Der erste Elektromotor 100 weist einen zylinderförmigen Rotor 1 auf, wobei eine Mantelfläche des Rotors 1 mindestens ein erstes Paar von Ausnehmungen 200 aufweist. Erfindungsgemäss ist auf einer jeweiligen Grundfläche 113 und/oder einer jeweiligen Deckfläche 400 des ersten Rotormagnets 2 und des zweiten Rotormagnets 2 eine Fixiereinheit 20 angeordnet, dazu ausgebildet, insbesondere durch Entgegenwirken gegen auf den ersten Rotormagnet 2 und den zweiten Rotormagnet 2 wirkende Fliehkräfte, den ersten Rotormagnet 2 in der ersten Ausnehmung 200 und den zweiten Rotormagnet 2 in der zweiten Ausnehmung 200 zu fixieren.

## Beschreibung

### Gebiet der Erfindung

Die vorliegende Erfindung betrifft eine Antriebseinheit für einen Propeller eines zum Vertikalflug und zum Horizontalflug geeigneten Luftfahrzeugs und ein entsprechendes Luftfahrzeug.

### Hintergrund der Erfindung

Die in den Offenbarungen DE202017006138U1, DE202019000936U1, DE202019002731U1 und EP21210288.3 gezeigten Luftfahrzeuge haben sogenannte "Tiltflügel" (d.h. Tragflügelteile, die sich neigen lassen) und an diesen jeweils befestigte "Tiltrotoren" (d.h. Propeller), wodurch eine sinnvolle Trennung des Steigfluges (vertikal) und des Geschwindigkeitsfluges (horizontal) ermöglicht ist. Bei den Luftfahrzeugen des Stands der Technik werden für den Vertikalflug (Senkrechtstart) alle Tragflügelteile aus ihrer Waagrechtposition derart um etwa 90 Grad geneigt, dass die Propeller entweder über oder unter den Tragflügeln vorliegen. Die durch die Rotation der Propeller erzeugten Luftströme verlaufen dabei in Richtung des Bodens, wodurch an dem jeweiligen Propeller eine Auftriebskraft vorliegt, die senkrecht nach oben, also vom Boden weg, gerichtet ist.

Dadurch, dass bei diesen Luftfahrzeugen die jeweilige Anordnung aus Tragflügelteil und Propeller relativ zum restlichen Teil des Tragflügels schwenkbar gelagert ist, ist eine Anordnung eines für die Rotation des Propellers zuständigen Motors in dem restlichen Teil des Tragflügels oder im Innenraum des Luftfahrzeugs nachteilhaft. Dies liegt unter anderem daran, dass so die durch den Motor bereitgestellte Bewegungsenergie über die Schwenkachse eines jeweiligen Tragflügelteils zum jeweiligen Propeller geleitet werden müsste, was wiederum den Aufbau des jeweiligen Tragflügels stark verkomplizieren würde.

Folglich sind für diese Art von Luftfahrzeugen Antriebseinheiten, bestehend aus einem Propellermotor und einem Getriebe zur Übertragung der durch den Propellermotor bereitgestellten Bewegungsenergie an den Propeller, notwendig, die in ein jeweiliges Tragflügelteil eingebaut werden können. Aufgrund des begrenzten Platzangebots innerhalb des jeweiligen Tragflügelteils müssen diese Antriebseinheiten folglich platzsparend ausgestaltbar sein.

Diese Antriebseinheiten müssen darüber hinaus ein geringes Gewicht aufweisen und trotzdem in der Lage sein, den Propeller auf hohe Betriebsdrehzahlen zu beschleunigen, da aufgrund des Eigengewichts des Luftfahrzeugs hohe Betriebsdrehzahlen für die Propeller erforderlich sind, damit ein sicheres und stabiles Abheben des Luftfahrzeugs gewährleistet werden kann.

Als Motor für solche Antriebseinheiten könnten Elektromotoren verwendet werden. Elektromotoren werden in diversen Anwendungen eingesetzt und somit ist eine Vielzahl an Bauweisen bekannt. Insbesondere aufgrund der hohen erreichbaren Leistungen und Drehmomente sind Elektromotoren unter Anderem besonders in der Elektromobilität gefragt.

Geschaltete Reluktanzmotoren haben eine unterschiedliche Anzahl ausgeprägter Pole an Rotor und Stator. Die Pole am Rotor werden häufig durch Permanentmagnete aus einem hartmagnetischen Material ausgebildet, während die Statorschenkel durch elektrische Spulen magnetisiert werden. Die Schenkel am Stator, auch Statorzähne genannt, werden abwechselnd ein- und ausgeschaltet. Das durch die bestromten Wicklungen der Schenkel erzeugte Magnetfeld zieht einen jeweils nächstgelegenen Pol des Rotors an und wird ausgeschalten, sobald (oder kurz bevor) der Pol des Rotors dem sie anziehenden Statorschenkel gegenübersteht. In dieser Position wird ein anderer Statorschenkel bestromt, sodass eine weitere Interaktion zwischen einem Pol und dem Schenkel entsteht und der Rotor in gleicher Drehrichtung erneut angezogen wird. Reluktanzmotoren werden zwar häufig mit drei oder mehr Phasen ausgebildet, allerdings gibt es auch Bauformen mit zwei oder nur einer Phase.

Ein Nachteil der Elektromotoren des Standes der Technik ist jedoch, dass sich aufgrund der heterogenen Bauweise der Rotoren, insbesondere durch die gesonderte Ausbildung der Rotormagnete, die Rotormagnete aufgrund der Zentrifugalkraft / Fliehkraft, insbesondere bei hohen Drehzahlen, lösen können. Ausserdem sind derart hohe Leistungen und hohe Drehmomente, die für die Antriebseinheit des Luftfahrzeugs notwendig sind, bei den Elektromotoren des Stands der Technik lediglich durch grosse und somit auch schwere Bauformen erreichbar.

### Aufgabe der Erfindung

Es ist deshalb eine Aufgabe der Erfindung, eine Antriebseinheit für einen Propeller eines zum Vertikalflug und zum Horizontalflug geeigneten Luftfahrzeugs und ein entsprechendes Luftfahrzeug bereitzustellen, die die Nachteile aus dem Stand der Technik überwinden.

Eine weitere Aufgabe liegt darin, eine Antriebseinheit mit einem Elektromotor bereitzustellen, der für den Einsatz bei hohen Drehzahlen geeignet ist.

Eine weitere Aufgabe liegt darin, eine Antriebseinheit bereitzustellen, die effizient, leistungsstark und/oder gleichmässig arbeitet.

Diese Aufgaben werden durch die Verwirklichung zumindest eines Teils der kennzeichnenden Merkmale der unabhängigen Patentansprüche gelöst. Merkmale, welche die Erfindung in alternativer oder vorteilhafter Weise weiterbilden, sind einigen der übrigen Merkmale der unabhängigen Patentansprüche und den abhängigen Patentansprüchen zu entnehmen.

### Zusammenfassung der Erfindung

Die vorliegende Erfindung betrifft eine Antriebseinheit für einen Propeller eines zum Vertikalflug und zum Horizontalflug geeigneten Luftfahrzeugs. Die Antriebseinheit weist dabei einen ersten Elektromotor ausgebildet zur Rotation des Propellers und ein erstes Exzentergetriebe zur Wirkverbindung zwischen dem Propeller und dem ersten Elektromotor auf. Der erste Elektromotor weist einen zylinderförmigen Rotor auf, wobei eine Mantelfläche des Rotors mindestens ein erstes Paar von Ausnehmungen aufweist.

Erfindungsgemäss erstrecken sich eine erste und eine zweite Ausnehmung des ersten Paars von Ausnehmungen jeweils von einer Deckfläche zu einer Grundfläche des Rotors parallel zu einer Mittelachse des Rotors. Weiterhin ist in der ersten Ausnehmung des ersten Paars von Ausnehmungen ein als Nordpol ausgebildeter erster Rotormagnet passgenau angeordnet und in der zweiten Ausnehmung des ersten Paars von Ausnehmungen ein als Südpol ausgebildeter zweiter Rotormagnet passgenau angeordnet.

Auf einer jeweiligen Grundfläche und/oder einer jeweiligen Deckfläche des ersten Rotormagnets und des zweiten Rotormagnets ist eine Fixiereinheit angeordnet, dazu ausgebildet, insbesondere durch Entgegenwirken gegen auf den ersten Rotormagnet und den zweiten Rotormagnet wirkende Fliehkräfte, den ersten Rotormagnet in der ersten Ausnehmung und den zweiten Rotormagnet in der zweiten Ausnehmung zu fixieren.

Optional können die erste Ausnehmung und die zweite Ausnehmung des ersten Paars von Ausnehmungen gegenüberliegend angeordnet sein.

Die vorliegende Erfindung hat den Vorteil, dass hohe Drehzahlen trotz der einhergehenden hohen Zentrifugalkräfte erreicht werden können, da die Rotormagnete durch die Fixiereinheit von einem Loslösen aus der jeweiligen Ausnehmung gesichert sind, ohne die erwünschte magnetische Wirkung der Rotormagnete massgebend zu beeinträchtigen.

Diese durch die Fixiereinheit bereitgestellte Halterungen für die Rotormagnete hat den weiteren Vorteil, dass der Rotor mit sehr kleinem (Magnet-) Spalt zum Stator bzw. zu den Statormagneten betrieben werden kann, wodurch das Drehmoment, die Leistung und der Wirkungsgrad des Elektromotors der erfindungsgemässen Antriebseinheit erhöht werden kann, ohne dass die Gefahr besteht, dass die Rotormagnete aufgrund des erhöhten Drehmoments und des wirkenden Magnetfelds aus den Ausnehmungen gerissen werden.

Ein weiterer Vorteil besteht darin, dass durch die zusätzliche Fixierung der Rotormagnete durch die Fixiereinheit ein aufwändiges Einkleben der Rotormagnete in die Ausnehmungen/Aussparungen/Vertiefungen des Rotors entfällt. Stattdessen genügt es, den Rotor aus einer Vergussmasse, insbesondere einem Vergussharz, zu gießen und die Rotormagnete während dieses Herstellungsprozesses einzugießen. Diese Art der Herstellung ist deutlich weniger aufwändig und damit kostengünstiger als das nachträgliche Einkleben der Rotormagnete.

Die Fixiereinheit (optional ausgebildet als Fliehkraftring) hat zudem die Funktion die auf die Rotormagnete wirkenden Magnetkräfte der Statormagnete abzufangen, die radial auf die Rotormagnete wirken, insbesondere bei niedriger Drehzahl. Somit wird verhindert, dass diese Magnetkräfte die Rotormagnete aus der jeweiligen Ausnehmung herausziehen.

In einer exemplarischen Ausführungsform der erfindungsgemässen Antriebseinheit kann der Elektromotor einen Stator aufweisen, wobei der Stator ein erstes und ein zweites Statormagnetpaar aufweisen kann. Die Stator-magnete des ersten Statormagnetpaars können gegenüberliegend an dem Rotor angeordnet sein und die Statormagnete des zweiten Statormagnetpaars können gegenüberliegend an dem Rotor und um 90 Grad versetzt zum ersten Statormagnetpaar angeordnet sein. Weiterhin können die jeweiligen Statormagnete U-förmig ausgebildet sein.

Jeweils ein Schenkel eines jeweiligen U-förmigen Statormagneten kann an den Rotor angeformt sein und kann eine Spule aufweisen, dazu vorgesehen, mit elektrischem Strom durchflossen zu werden und dadurch ein Magnetfeld in dem jeweiligen Schenkel zu erzeugen. Ein jeweiliger Statormagnet kann derart ausgebildet sein, dass wenn ein elektrischer Strom durch die zwei Spulen des jeweiligen Statormagneten fliesst, ein Schenkel des jeweiligen Statormagneten als Nordpol und der andere Schenkel als Südpol ausgebildet ist, wodurch ein als Nordpol ausgebildeter Rotormagnet von dem als Südpol ausgebildeten Schenkel und ein als Südpol ausgebildeter Rotormagnet von dem als Nordpol ausgebildeten Schenkel des jeweiligen Statormagneten derart angezogen wird, dass der Rotor um eine koaxial zur Mittelachse des Rotors verlaufenen ersten Rotationsachse gedreht wird.

Weiterhin können die Spulen der Statormagnete des ersten Statormagnetpaars über eine erste elektrische oder elektronische Schaltung miteinander verbunden sein und die Spulen der Statormagnete des zweiten Statormagnetpaars können über eine zweite elektrische oder elektronische Schaltung miteinander verbunden sein.

Optional kann der Elektromotor eine Montageplatte aufweisen, auf der zumindest die Schenkel der Statormagnete des ersten Statormagnetpaars und/oder die Schenkel der Statormagnete des zweiten Statormagnetpaars angeordnet, insbesondere angeschraubt, sein können. Auf diese Weise wird eine korrekte und stabile Anordnung der Statormagnete relativ zum Rotor (und den weiteren Komponenten des Elektromotors) gewährleistet.

In einer weiteren exemplarischen Ausführungsform kann die Mantelfläche des Rotors ein zweites und ein drittes Paar von Ausnehmungen aufweisen. Somit kann der Rotor insgesamt sechs Ausnehmungen aufweisen, wobei die sechs Ausnehmungen relativ zur Mittelachse des Rotors jeweils um 60 Grad radial (entlang des Umfangs des Rotors bei einer Drehung um die Mittelachse/Rotationsachse) versetzt in der Mantelfläche vorliegen können, wodurch jeweils zwischen zwei entlang der Mantelfläche benachbarten Ausnehmungen ein gleicher Abstand vorliegen kann.

In einer weiteren Ausführungsform kann in dem zweiten Paar von Ausnehmungen ein (zur Mantelfläche hin / zum äusseren Umfang des Rotors hin / nach aussen hin) als Nordpol ausgebildeter dritter Rotormagnet und ein (zur Mantelfläche hin / zum äusseren Umfang des Rotors hin / nach aussen hin) als Südpol ausgebildeter vierter Rotormagnet und in dem dritten Paar von Ausnehmungen ein (zur Mantelfläche hin / zum äusseren Umfang des Rotors hin / nach aussen hin) als Nordpol ausgebildeter fünfter Rotormagnet und ein (zur Mantelfläche hin / zum äusseren Umfang des Rotors hin / nach aussen hin) als Südpol ausgebildeter sechster Rotormagnet derart angeordnet sein, dass sich entlang der Mantelfläche als Nordpol ausgebildete und als Südpol ausgebildete Rotormagnete abwechseln. Durch die Anordnung der sechs Magnete an der Mantelfläche des Rotors kann auf einen Magnetkranz, der aus einer Vielzahl an Magneten besteht und somit ressourcenintensiver ist, verzichtet werden und trotzdem eine hohe Drehzahl und Leistung bei gleichzeitig gleichmässiger Rotation erreicht werden.

In einer weiteren exemplarischen Ausführungsform der erfindungsgemässen Antriebseinheit kann eine erste Magnetfluss-übertragungseinheit, insbesondere eine erste Weicheisenbrücke, derart angeordnet sein, dass, wenn der erste Rotormagnet und/oder der zweite Rotormagnet einem durch den Stator des Elektromotors bereitgestelltem Magnetfeld ausgesetzt ist, ein Magnetfluss zwischen dem ersten Rotormagnet und dem zweiten Rotormagnet bereitgestellt wird.

Eine Magnetflussübertragungseinheit zeichnet sich dadurch aus, dass diese aus einem Werkstoff mit möglichst hoher magnetischer Sättigungsflussdichte und hoher magnetischer Permeabilität besteht. Dadurch wird der magnetische Fluss, der bei Stromfluss durch den elektrischen Leiter der Spule entsteht, verlustarm gebündelt, geführt und somit die Induktivität erhöht. In anderen Worten bestehen die Magnetflussübertragungseinheiten aus einem Werkstoff, dessen Verhältnis von magnetischer Flussdichte zur magnetischen Feldstärke einen magnetischen Fluss begünstigt.

Die Ausgestaltung des Elektromotors der erfindungsgemässen Antriebseinheit hat den Vorteil, dass die Magnetflussübertragungseinheit einen Magnetfluss zwischen den Rotormagneten eines sich gegenüberliegend angeordneten Paars von Ausnehmungen begünstigt. Dies verbessert zusätzlich zur Fixiereinheit den Halt der vom Rotor selbst separat ausgebildeten Rotormagnete, die so auch bei einer hohen Zentrifugalkraft bzw. bei hohen Drehzahlen in den Ausnehmungen und somit im Rotor gehalten werden.

Weiterhin trägt der durch die Magnetflussübertragungseinheit durch den Rotor bereitgestellte Magnetfluss dazu bei, dass die Rotation des Rotors in dem Elektromotor der erfindungsgemässen Antriebseinheit gleichmässiger (mit anderen Worten "ruckelfreier"), (reibungs-) verlustärmer und somit effizienter und bei einem höheren Drehmoment und somit einer verbesserten Leistung gegenüber Rotoren bzw. Elektromotoren des Stands der Technik bereitgestellt werden kann.

In einer weiteren Ausführungsform kann der Rotor eine zweite und eine dritte Magnetflussübertragungseinheit aufweisen, wobei diese in manchen Ausführungsformen insbesondere durch eine zweite und eine dritte Weicheisenbrücke ausgebildet sein können. Dabei können die zweite Magnetflussübertragungseinheit zwischen den Ausnehmungen des zweiten Paars von Ausnehmungen und die dritte Magnetflussübertragungseinheit zwischen den Ausnehmungen des dritten Paars von Ausnehmungen angeordnet sein. Ausserdem können die erste, die zweite und die dritte Magnetflussübertragungseinheit in Axialrichtung der Mittelachse des Rotors versetzt voneinander angeordnet sein. Diese Ausführungsform hat den Vorteil, dass alle sechs Rotormagnete durch die über die drei Magnetflussübertragungseinheit übertragenen Magnetflüsse auch bei hohen Drehzahlen fest am Rotor gehalten werden.

In einer weiteren exemplarischen Ausführungsform, kann an den Statormagneten des ersten Statormagnetpaars und/oder den Statormagneten des zweiten Statormagnetpaars eine erste Kühleinheit, insbesondere aufweisend mehrere Kühlrippen, angeordnet sein. Die erste Kühleinheit kann dazu vorgesehen sein, bei einer Rotation des Rotors - um eine koaxial zur Mittelachse des Rotors verlaufenen ersten Rotationsachse - an die Statormagnete des ersten Statormagnetpaars und/oder die Statormagnete des zweiten Statormagnetpaars abgegebene Reibungswärme abzuführen; und/oder eine Verlustwärme der Spulen der Statormagnete abzuführen.

In einer weiteren exemplarischen Ausführungsform kann ein jeweiliger Schenkel eines jeweiligen Statormagneten derart an den Rotor angeformt sein, dass zwischen dem jeweiligen Schenkel und dem Rotor ein Abstand im Bereich von 10 µm bis 300 µm, insbesondere im Bereich von 50 µm bis 100 µm, vorliegt.

Eine Ausgestaltung des Elektromotors der erfindungsgemässen Antriebseinheit mit einem derart verringerten Magnetspalt hat den Vorteil, dass die Drehzahl des Rotors reduziert werden kann und zeitgleich die Motorleistung beibehalten wird. Diese Reduzierung der Drehzahl des Rotors bewirkt eine Reduktion von Geräuschen des Motors, wodurch die Antriebseinheit und somit auch das Luftfahrzeug mit dieser Antriebseinheit geräuschärmer betrieben werden kann.

In einer weiteren exemplarischen Ausführungsform können innerhalb eines Hohlraums des Rotors mechanische Halteelemente angeordnet sein, welche mit darauf abgestimmten Halteelement-Gegenstücken einer in den Hohlraum des Rotors eingeschobenen Rotationsaufnahmeeinheit derart zusammenwirken können, dass bei einer Rotation des Rotors um eine koaxial zur Mittelachse des Rotors verlaufenen ersten Rotationsachse die Rotationsaufnahmeeinheit um die erste Rotationsachse mitrotiert wird.

In einer weiteren Ausführungsform kann die jeweilige Magnetflussübertragungseinheit die mechanischen Halteelemente aufweisen. Auf diese Weise müssen die Halteelemente nicht nachträglich in den Rotor eingebracht werden, wodurch ein Produktionsschritt eingespart werden kann.

In einer weiteren Ausführungsform können die mechanischen Halteelemente eine Zahnnabe ausbilden, wobei die Zahnnabe dazu ausgebildet ist, mit einer als Zahnwelle ausgebildeten Rotationsaufnahmeeinheit zusammenzuwirken.

In einer weiteren exemplarischen Ausführungsform kann die Rotationsaufnahmeeinheit derart an dem ersten Exzentergetriebe angeordnet sein, dass bei einer Rotation der Rotationsaufnahmeeinheit das erste Exzentergetriebe mitrotiert wird. Alternativ oder ergänzend kann an einer dem ersten Exzentergetriebe gegenüberliegenden Seite der Rotationsaufnahme-einheit eine zweite Kühleinheit angeordnet sein, dazu vorgesehen, eine erste Antriebsbatterie ausgebildet zur Versorgung des Elektromotors mit elektrischer Energie zu kühlen.

Optional kann die zweite Kühleinheit als Kühlpropeller ausgebildet sein, so dass bei einer Rotation der Rotationsaufnahmeeinheit der Kühlpropeller mitrotiert wird.

In einer weiteren exemplarischen Ausführungsform kann die Fixiereinheit ringförmig ausgebildet sein und einen derartigen Ringdurchmesser aufweisen, dass die auf der jeweiligen Grundfläche und/oder der jeweiligen Deckfläche des ersten Rotormagnets und des zweiten Rotormagnets angeordnete Fixiereinheit über jeweilige axiale Fortsätze des ersten Rotormagnets und des zweiten Rotormagnets auf den ersten Rotormagnet und den zweiten Rotormagnet wirkende Fliehkräfte/Zentrifugalkräfte aufnehmen kann.

Unter einem axialen Fortsatz wird ein Fortsatz verstanden, der sich von der Grund- und/oder Deckfläche des jeweiligen Rotormagnets in Richtung einer Längsachse des jeweiligen Rotormagnets erstreckt.

In einer weiteren exemplarischen Ausführungsform erstrecken sich diese axialen Fortsätze in einem Bereich der Grund- und/oder Deckfläche des jeweiligen Rotormagnets, der weniger weit von der Mittelachse des Rotors entfernt ist als ein Bereich der Grund- und/oder Deckfläche des jeweiligen Rotormagnets ohne Fortsatz. Mit anderen Worten ist die Fixiereinheit derart ausgestaltet und am Rotor angeordnet, dass die Fortsätze der Rotormagnete innerhalb der ringförmigen Fixiereinheit vorliegen. Diese Ausführungsform hat den Vorteil, dass die ringförmige Fixiereinheit für die Fortsätze der Rotormagnete eine Art Kante/Anschlag ausbildet, wodurch eine (z.B. durch Fliehkräfte ausgelöste) Bewegung der Rotormagnete, insbesondere senkrecht zur Mittelachse des Rotors in eine Richtung von der Mittelachse des Rotors weg, verhindert werden kann. Mit anderen Worten liegen die Fortsätze der Rotormagnete an der inneren Mantelfläche des starren, unverformbaren Fixierrings an, wodurch der jeweilige Rotor in der Ausnehmung gehalten wird.

In einer weiteren exemplarischen Ausführungsform kann die Fixiereinheit auf die jeweilige Grundfläche und/oder die jeweilige Deckfläche des ersten Rotormagnets und des zweiten Rotormagnets geklebt sein.

In einer weiteren exemplarischen Ausführungsform kann die Fixiereinheit als Axiallager zur Aufnahme von koaxial und/oder parallel zur Mittelachse auf den Rotor wirkenden Kräften ausgebildet sein.

Optional kann die Fixiereinheit an ihrer von der jeweiligen Grundfläche und/oder der jeweiligen Deckfläche des ersten Rotormagnets und des zweiten Rotormagnets abgewandten Seite eine Gleitschicht aufweisen, insbesondere wobei die Gleitschicht Molybdändisulfid aufweist.

In einer weiteren exemplarischen Ausführungsform kann der Rotor eine Vergussmasse, insbesondere ein Vergussharz, aufweisen.

Optional kann die Vergussmasse zwischen dem ersten Rotormagnet und/oder dem zweiten Rotormagnet und der ersten Magnetflussübertragungs-einheit eingegossen sein. Optional kann die Vergussmasse elektrisch isolierend wirken. Optional kann die Vergussmasse als ein Epoxidharz ausgebildet sein.

In einer weiteren exemplarischen Ausführungsform kann das erste Exzentergetriebe, insbesondere eine Zykloidenscheibe des ersten Exzentergetriebes, ein Leichtbaumaterial, insbesondere Carbon, vorzugsweise glasfaserverstärktes Carbon, Kevlar, Titan und/oder Aluminium aufweisen.

In einer weiteren Ausführungsform können die U-förmigen, auch hufeisenförmig genannten Statormagnete der jeweiligen Statormagnetpaare so ausgeformt sein, dass wenn ein Schenkel mit einem Rotormagnet übereinanderliegt, auch die anderen Schenkel desselben Statormagnetpaars mit weiteren Rotormagneten übereinanderliegen.

Ein jeweiliger Statormagnet kann derart ausgebildet sein, dass, wenn ein elektrischer Strom durch dessen zwei Spulen fliesst, ein Schenkel des jeweiligen Statormagneten als Nordpol und der andere Schenkel als Südpol ausgebildet ist. Dadurch kann ein als Nordpol ausgebildeter Rotormagnet von dem als Südpol ausgebildeten Schenkel und ein als Südpol ausgebildeter Rotormagnet von dem als Nordpol ausgebildeten Schenkel des jeweiligen Statormagneten derart angezogen werden, dass der Rotor um eine koaxial zur Mittelachse des Rotors verlaufenen ersten Rotationsachse gedreht wird.

Des Weiteren können die Spulen der Statormagnete des ersten Statormagnetpaars über eine erste elektrische oder elektronische Schaltung miteinander verbunden sein und die Spulen der Statormagnete des zweiten Statormagnetpaars über eine zweite elektrische oder elektronische Schaltung miteinander verbunden sein.

Der Elektromotor kann ferner einen ersten und einen zweiten Hallsensor aufweisen. Der erste Hallsensor kann derart an dem Rotor angeordnet sein, dass wenn der erste Hallsensor von einem Rotormagnet des Rotors passiert wird, ein derartiges erstes Schaltsignal bereitgestellt wird, welches die erste elektrische oder elektronische Schaltung dazu veranlasst, einen ersten Stromfluss durch die Spulen des ersten Statormagnetpaars bereitzustellen.

Der zweite Hallsensor kann derart an dem Rotor angeordnet sein, dass wenn der zweite Hallsensor von einem Rotormagnet des Rotors passiert wird, ein derartiges zweites Schaltsignal bereitgestellt wird, welches die zweite elektrische oder elektronische Schaltung dazu veranlasst, einen zweiten Stromfluss durch die Spulen des zweiten Statormagnetpaars bereitzustellen.

Durch die Anordnung von zwei Hallsensoren und somit der Verdopplung der bereitgestellten Schaltsignale im Vergleich zu Elektromotoren des Stands der Technik mit nur einem Hallsensor kann ein schnelleres Umschalten zwischen der ersten und der zweiten elektrischen oder elektronischen Schaltung bereitgestellt werden. Dieses schnellere Umschalten ermöglicht ein gleichmässigeres Rotieren des Rotors bei zugleich höherer Geschwindigkeit / Leistung.

In einer weiteren exemplarischen Ausführungsform kann der erste und/oder zweite Stromfluss so lange aufrechterhalten werden, bis ein nächstes erstes und/oder zweites Schaltsignal bereitgestellt wird. Diese Ausführungsform bewirkt vorteilhafterweise, dass bis zum Abschalten der Stromzufuhr ein Stromfluss durch die Spulen eines jeweiligen Statormagnetenpaars vorliegt und so auch permanent eines der Statormagnetenpaare magnetisiert ist. Auf diese Weise werden permanent bestimmte Rotormagnete (je nach Polung und derzeitiger Position) von den aktuell aktivierten Statormagneten eines Statormagnetenpaars angezogen, wodurch permanent eine Beschleunigungskraft auf den Rotor wirkt. Somit sind neben einer gleichmässigen Rotation auch hohe Drehzahlen, ein hohes Drehmoment und hohe Leistungen des Rotors erreichbar.

In einer weiteren Ausführungsform kann der erste und der zweite Hallsensor derart an dem Rotor angeordnet sein, dass der erste oder der zweite Hallsensor nach einer Drehung des Rotors um 30 Grad von einem Rotormagnet des Rotors passiert wird. In gewissen Ausführungsformen können insbesondere nach einer vollständigen Umdrehung des Rotors zwölf gleichmässig versetzte Schaltsignale bereitgestellt werden. Durch diese Vielzahl an gleichmässig versetzten Schaltsignalen kann eine gleichmässige, ruckelfreie Rotation des Rotors des Elektromotors bereitgestellt werden. Weiterhin ist dadurch der Motor leistungsstärker und der Rotor kann höhere Drehgeschwindigkeiten erreichen.

In einer weiteren Ausführungsform kann der erste und der zweite Hallsensor derart an dem Rotor angeordnet sein, dass erste und zweite Schaltsignale alternierend bereitgestellt werden.

Vorteilhafterweise können die beiden Hallsensoren an diversen unterschiedlichen Positionen am Rotor angeordnet werden. Bei der jeweiligen Ausführungsform kann die relative Anordnung zwischen dem ersten Hallsensor und dem zweiten Hallsensor derart ausgestaltet sein, dass der erste und der zweite Hallsensor alternierend nach einer Drehung des Rotors um jeweils 30 Grad von irgendeinem Rotormagnet des Rotors passiert wird.

Die vorliegende Erfindung betrifft zudem ein Luftfahrzeug geeignet zum Vertikalflug und zum Horizontalflug, wobei das Luftfahrzeug mindestens einen Tragflügel aufweist; der mindestens eine Tragflügel mindestens ein schwenkbares Tragflügelteil aufweist; und der mindestens eine schwenkbare Tragflügelteil einen Propeller aufweist, der am Tragflügelteil rotierbar um eine Rotationsachse gelagert ist, wobei der mindestens eine schwenkbare Tragflügelteil eine Antriebseinheit gemäss einem der vorhergehenden Ausführungsformen aufweist.

In einer exemplarischen Ausführungsform des erfindungsgemässen Luftfahrzeugs kann das Luftfahrzeug eine Fallschirmöffnungseinheit aufweisen, wobei die Fallschirmöffnungseinheit dazu vorgesehen sein kann, einen Fallschirm in Reaktion auf ein Steuersignal aus dem Luftfahrzeug auszubringen.

In einer exemplarischen Ausführungsform des erfindungsgemässen Luftfahrzeugs kann das mindestens eine schwenkbare Tragflügelteil aufweisen
- zumindest eine erste Antriebsbatterie ausgebildet zur Versorgung des Elektromotors mit elektrischer Energie, wobei die erste Antriebsbatterie so im oder am Tragflügelteil angeordnet sein kann, dass sie dort austauschbar und/oder aufladbar ist,
- eine Kommunikationseinheit ausgebildet zum Empfang von Regelsignalen, insbesondere von Regelsignalen einer externen Sendequelle,
- eine Regeleinheit ausgebildet, jeweils in Abhängigkeit von den Regelsignalen, zum Regeln eines Schwenkwinkels des Tragflügelteils und zum Regeln der Rotation des Propellers, und/oder
- zumindest eine auf einer Oberfläche des Tragflügelteils angeordnete photovoltaische Zelle, die mit der ersten Antriebsbatterie verbunden sein kann und zum Aufladen der ersten Antriebsbatterie ausgebildet sein kann.

In einer exemplarischen Ausführungsform des erfindungsgemässen Luftfahrzeugs kann das Luftfahrzeug, insbesondere in einem Cockpit des Luftfahrzeugs, mindestens eine zweite Antriebsbatterie zur Versorgung mindestens eines Schrittmotors mit elektrischer Energie aufweisen, wobei der mindestens eine Schrittmotor zum Antrieb mindestens eines Schwenkmittels ausgebildet sein kann, wobei mittels des mindestens einen Schwenkmittels eine Ausschwenkung und/oder eine Rückstellung der Ausschwenkung des mindestens einen schwenkbaren Tragflügelteils bereitstellbar sein kann.

In anderen Worten und rein beispielhaft kann das erfindungsgemässe Luftfahrzeug derart ausgestaltet sein, dass die Zellen der Traktionsbatterien vom Abluftstrom der Elektromotorkühlung umströmt werden (immersiv). Bei hoher Leistung ist die Temperatur der E- Zellen höher als die Temperatur der Kühlrippen der hufeisenförmigen Ständerpole, sodass der vom Motorlüfter gelieferte Kühlluftstrom gleichzeitig die Traktionsbatterien mitkühlt. Für das Laden der Traktionsbatterie kann allerdings ein zusätzlicher Lüfter installiert werden, der mit dem Ladestrom betrieben werden kann. Bei einer Laderate 3C (14,1 KW) heizen sich die Zellen bei der Verwendung eines einfachen Kühlers auf eine Temperatur von 67 Grad Celsius auf, weshalb eine immersive Kühlung erreicht werden kann.

Insbesondere beim Waagrechtflug herrschen höhere Propeller-drehzahlen als beim Senkrechtflug, weshalb auch die Drehzahl des Rotors höher ist. Dies führt dazu, dass die Ständerspulen gekühlt werden müssen, im engen Magnetspalt hohe Relativgeschwindigkeiten herrschen und die Kugellager ihre Reibungsverluste an die hufeisenförmigen Ständermagnete weiterleiten müssen. Aufgrund der hohen Drehzahlen kann beim Waagrechtflug (nur) mit Luftkühlung gearbeitet werden. Der vom Motor mit hoher Drehzahl angetriebene Axiallüfter kann für einen starken Luftstrom sorgen, welcher wiederum für den Wärmetransport aus dem Motor in den Tiltraum sorgen kann. Der Tiltraum kann optional Öffnungen zu einem Bereich ausserhalb des Luftfahrzeugs haben. Die Kühlung der Statormagnete kann optional durch Kühlrippen unterstützt werden, die sowohl mit dem Statormagnet als auch mit dem Gehäuse des Motors kontaktiert sein können.

In einer exemplarischen Ausführungsform können die Anordnung der Rotormagnete sowie der Statormagnete und die dadurch entstehenden Magnetkräfte zwischen den Rotormagneten und den Statormagneten dazu beitragen, den Rotor zentriert zu lagern. Wenn ein Rotormagnet einem gleich gepolten Statormagnet gegenübersteht, entsteht eine Kraft, welche in Richtung der Mittelachse wirkt. Bei einer Vergrösserung des Abstands der beiden Magnete (z.B. Vergrösserung des Luftspalts zwischen Rotor und Stator) verringert sich diese Kraft. Bei einer Verringerung des Luftspalts erhöht sich hingegen die Kraft.

Auf der gegenüberliegenden Seite des Rotors wird gleichzeitig ebenfalls ein Rotormagnet von einem Statormagneten abgestossen. Somit entsteht eine weitere Kraft, deren Wirkung der gegenüberliegenden Kraft entgegen gerichtet ist. Würde sich nun der Rotor von der Mittelachse radial entfernen und somit der Luftspalt auf einer Seite somit vergrössert werden, würde sich entsprechend die abstossende Kraft verringern. Allerdings würde sich gleichermassen der Luftspalt zwischen dem Rotor und dem Stator auf der gegenüberliegenden Seite des Rotors verringern und somit die resultierende Kraft vergrössern. Dies hat zur Folge, dass die entstehenden Kräfte den Rotor während der Rotation zentriert halten.

Wenn ein Rotormagnet einem gegensätzlich gepolten Statormagnet gegenüberstehen, stehen sich die entstehenden Kräfte entgegen. Dies ist darauf zurückzuführen, dass die vergrössernden oder verkleinernden Abstände zwischen dem Statormagnet und dem Rotormagnet zu einer Verringerung respektive Vergrösserung der Kräfte führt und sich somit, durch die symmetrische Bauweise, die entstehenden Kräfte entgegenwirken. Der Rotor wird somit durch die magnetischen Kräfte zwischen dem Rotor und dem Stator radial gelagert.

In anderen Worten und rein beispielhaft sind es bei dem hier vorliegenden elektrostatischen Lager die abstoßenden Kräfte der gleichartigen Magnetpole, die die Steifigkeit und Tragkraft des Lagers bewirken. Durch die Konvergenz werden die sich gegenüberliegenden Laufspalte zu einem System der Steifigkeit und Tragkraft in einem tragfähigen Lagersystem. Bei den enger werdenden Laufspalte erhöht sich die Koerzitivfeldstärke, bei den weiterwerdenden Laufspalten verringert sich diese Feldstärke. Dadurch entsteht eine Rückstellkraft, die verhindert, dass sich die Rotoroberfläche der Oberfläche des Ständersystems nähert. Die Magnetpole stossen sich gegenseitig ab und werden so zum elektrostatischen, hochwirksamen Radiallager. Durch die Kommutierung dreht sich dieses Lager um 90 Grad. Somit wird das System zu einem rotierenden elektrostatischen Lager. Der Rotor lagert sich selbst, so dass er nie aus dem Zentrum laufen kann. Die Wellenlager haben deshalb nur noch die Aufgabe, bei abgeschaltetem Strom oder beim Stillstand zu verhindern, dass der Rotor die Polschuhe des Ständersystems berührt, um Reibungshitze und Verschleiss zu vermeiden. Diese Selbstzentrierung des Rotors ermöglicht eine Reduzierung des Magnetspaltes zwischen den Dauermagneten und den Ständerpolen, wodurch sich das Drehmoment des Motors verbessert und die Momentpulsation und das Geräusch kleiner wird. Bei Elektromotoren des Stands der Technik, die häufig Permanentmagnete aus Weicheisen aufweisen, ist ein solcher verringerter Magnetspalt nicht möglich. Das liegt unter anderem daran, dass sich die Magnete aus Weicheisen bei hohen Drehzahlen und unter dem Einfluss der Wärme und/oder der Fliehkraft stark verformen und ausdehnen und so bei einem zu geringen Magnetspalt am Stator reiben.

Rein exemplarisch und in anderen Worten kann zwischen einem Kurzzeitbetrieb und einem Langzeitbetrieb unterschieden werden. Der Kurzzeitbetrieb betrifft den Senkrechtstart des Luftfahrzeugs mit hoher Leistung pro Antrieb (ca. 25 KW [470 Nm]). Das rührt daher, dass die Propeller in stehender Luft arbeiten. Diese hohe Leistung dauert allerdings nur wenige Sekunden, maximal wenige Minuten. Deshalb kann das Exzentergetriebe mit einer verhältnismäßig niederen Drehzahl (z.B. ca. 520 [U/rain]) über reibungsarme Wälzlager mit Dauerfettfüllung geschmiert werden. Die Bewegung des Karbonexzenters innerhalb des innenverzahnten Hohlrades mit 36 Zähnen hat zwar eine hohe Exzentrizitätsdrehzahl, jedoch eine sehr kleine Exzentrizität von 3,5 [mm]. Sie läuft entgegengesetzt zum Exzenter. Die Reibwärme wird über Körpertransfer an die Umgebung abgeleitet. Im Horizontalflug erhöht sich dann die Drehzahl auf das etwa 1,5-fache der Propellerdrehzahl, die Leistung fällt allerdings auf etwa 6,5 [KW] ab. Somit ist auch hier eine Dauerfettfüllung als Schmierung ausreichend.

### Kurzbeschreibung der Zeichnungen

Die erfindungsgemässe Antriebseinheit und das erfindungsgemässe Luftfahrzeug werden nachfolgend anhand von in den Figuren schematisch dargestellten Ausführungsbeispielen rein beispielhaft näher beschrieben. Gleiche Elemente sind in den Figuren mit gleichen Bezugszeichen gekennzeichnet. Die beschriebenen Ausführungsformen sind in der Regel nicht massstabsgetreu dargestellt und sie sind auch nicht als Einschränkung zu verstehen. Im Einzelnen zeigen
- Fig. 1:: Schematische Darstellung einer exemplarischen Ausführungsform des Elektromotors der erfindungsgemässen Antriebseinheit,
- Fig. 2:: Schematische Darstellung einer exemplarischen Ausführungsform der erfindungsgemässen Antriebseinheit,
- Fig. 3:: Seitenansicht einer exemplarischen Ausführungsform des erfindungsgemässen Luftfahrzeugs,
- Fig. 4A-4B:: schematische Darstellungen der Exzenterplatten des Exzentergetriebes einer exemplarischen Ausführungsform der erfindungsgemässen Antriebseinheit.

### Detaillierte Beschreibung der Zeichnungen

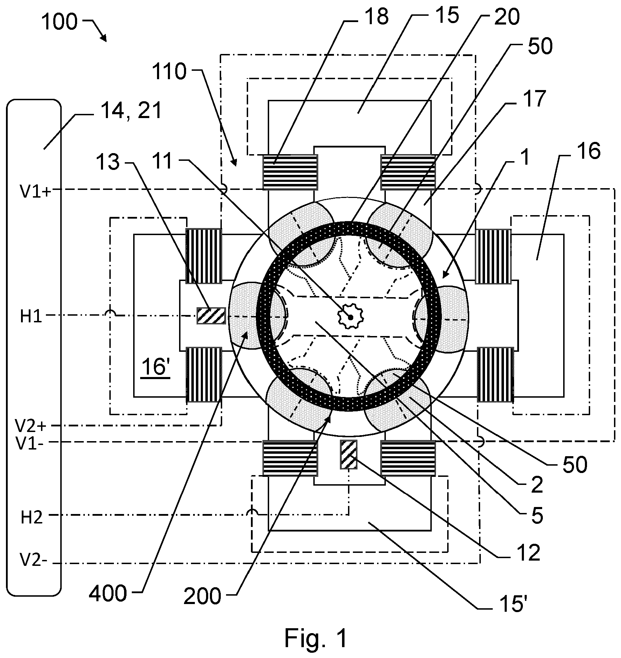

Die **Figur 1** zeigt eine schematische Darstellung einer exemplarischen Ausführungsform des Elektromotors 100 der erfindungsgemässen Antriebseinheit 300. Bei der gezeigten exemplarischen Ausführungsform ist eine Frontansicht des Rotors 1 (also mit Blickrichtung auf die Deckfläche 400 des Rotors 1) ersichtlich, wobei drei Magnetflussübertragungseinheiten 5 ersichtlich sind, welche derart zwischen jeweils zwei sich gegenüberliegenden Ausnehmungen 200 angeordnet sind, dass, wenn zwei Rotormagnete 2, die in den entsprechenden Ausnehmungen 200 angeordnet sind, einem durch einen Stator 110 des Elektromotors 100 bereitgestelltem Magnetfeld ausgesetzt sind, ein Magnetfluss zwischen den Rotormagneten 2 bereitgestellt oder begünstigt werden.

Die sechs Ausnehmungen 200, respektive die darin angeordneten Rotormagnete 2 liegen relativ zur Mittelachse bzw. zur Rotationsachse 11 des Rotors 1 jeweils um 60 Grad radial versetzt in der Mantelfläche vor, wodurch jeweils zwischen zwei entlang der Mantelfläche benachbarten Ausnehmungen 200 ein gleicher Abstand vorliegt. Die Rotormagnete 2 sind derart angeordnet, dass sie sich entlang der Mantelfläche als Nordpol ausgebildete und als Südpol ausgebildete Rotormagnete 2 abwechseln. Diese als Nordpol, respektive als Südpol ausgebildeten Rotormagnete 2 sind insbesondere durch von ausserhalb des Rotors 1, auf den Rotor 1 gerichtete Blickweise beschrieben. In anderen Worten sind die Rotormagnete 2 nach aussen hin abwechselnd als Nordpol und als Südpol ausgebildet.

Die beiden Hallsensoren 12, 13 sind dabei so am Stator 110 angeordnet, dass sie bei einer Rotation des Rotors 1 in Abständen von 30 Grad alternierend ein Signal erzeugen. Es wird darauf hingewiesen, dass die Hallsensoren 12, 13 an diversen Positionen angeordnet werden könnten. Ausserdem wird darauf hingewiesen, dass aufeinanderfolgende Signal nicht durch denselben Rotormagneten 2 ausgelöst werden müssen. Beispielsweise könnten die Hallsensoren 12, 13 um 90 Grad versetzt zueinander angeordnet sein. Somit würde der erste Hallsensor 12 ein Signal erzeugen, sobald er von einem ersten Rotormagneten 2 passiert wird und der zweite Hallsensor 13 würde nach einer Rotation des Rotors um 30 Grad ein nächstes Signal erzeugen. Ein solches durch einen der beiden Hallsensoren 12, 13 bereitgestelltes Signal veranlasst die erste bzw. zweite elektrische oder elektronische Schaltung 14, 21 dazu, einen Stromfluss durch die Spulen der Statormagnete eines der beiden Statormagnetpaare bereitzustellen.

Wenn ein elektrischer Strom durch die zwei Spulen eines Statormagneten fliesst, wird ein Schenkel des jeweiligen Statormagneten als Nordpol und der andere Schenkel als Südpol ausgebildet. Dadurch wird ein als Nordpol ausgebildeter Rotormagnet von dem als Südpol ausgebildeten Schenkel und ein als Südpol ausgebildeter Rotormagnet von dem als Nordpol ausgebildeten Schenkel des jeweiligen Statormagneten derart angezogen, dass der Rotor um eine koaxial zur Mittelachse 11 des Rotors verlaufenen ersten Rotationsachse gedreht wird.

Der Stromfluss wird so lange aufrechterhalten, bis ein nächstes Schaltsignal bereitgestellt wird. Diese Ausführungsform bewirkt vorteilhafterweise, dass bis zum Abschalten der Stromzufuhr ein Stromfluss durch die Spulen eines jeweiligen Statormagnetenpaars vorliegt und so auch permanent eines der Statormagnetenpaare magnetisiert ist. Auf diese Weise werden permanent bestimmte Rotormagnete (je nach Polung und derzeitiger Position) von den aktuell aktivierten Statormagneten eines Statormagnetenpaars angezogen, wodurch permanent eine Beschleunigungskraft auf den Rotor wirkt. Somit sind neben einer gleichmässigen Rotation auch hohe Drehzahlen, ein hohes Drehmoment und hohe Leistungen des Rotors erreichbar.

In gewissen Ausführungsformen werden insbesondere nach einer vollständigen Umdrehung des Rotors zwölf gleichmässig versetzte Schaltsignale bereitgestellt. Durch diese Vielzahl an gleichmässig versetzten Schaltsignalen kann eine gleichmässige, ruckelfreie Rotation des Rotors des Elektromotors bereitgestellt werden. Weiterhin ist dadurch der Motor leistungsstärker und der Rotor kann höhere Drehgeschwindigkeiten erreichen.

Es soll darauf hingewiesen werden, dass die erste und die zweite elektronische oder elektrische Schaltung 14, 21 dieselbe sein können bzw. deren Funktion durch eine einzelne Schaltung bereitgestellt werden kann. Allerdings gilt es dabei zu beachten, dass sich die Signal- und Versorgungsleitungen dennoch unterscheiden können. In der exemplarischen Ausführungsform dieser Figur sind die erste elektrische oder elektronische Schaltung 14 und die zweite elektrische oder elektronische Schaltung 21 vereint.

Die exemplarische elektronische oder elektrische Schaltung 14, 21 bestromt die Spulen der Statormagnete 15, 15', 16, 16' über die Leitungen V1+ und V1-respektive V2+ und V2-. Die Hallsensoren werden mit einer Spannungsversorgung gespiesen, sodass deren Signale über eine Signalleitung ausgelesen werden kann. Diese drei benötigten Anschlüsse der Hallsensoren 12, 13 wurden in dieser Figur der Übersichtlichkeit halber schematisch (H1, H2) als einzelne Leitungen mit jeweils drei Anschlüssen dargestellt. In gewissen Ausführungsformen können die Hallsensoren 12, 13 auch so angeordnet sein, dass die Bestromung der Spulen 18 unterbrochen wird, bevor die Rotormagnete 2 die Position der Statormagnete 15, 15', 16, 16' erreicht hat bzw. die Bestromung der Spulen des anderen Statormagnetpaars bereits vorher beginnt. Ein entsprechender zeitlicher Versatz kann in weiteren Ausführungsformen auch mittels der elektrischen oder elektronischen Schaltung 14, 21 umgesetzt werden.

Die ringförmige Fixiereinheit 20 ist auf der Deckfläche 400 des Rotors 1 sowie auf die jeweilige Deckfläche der Rotormagnete 2 derart angeordnet (z.B. durch Aufkleben mit einem geeigneten Mittel), dass sich die axialen Fortsätze 50 der jeweiligen Rotormagnete 2 (Fortsätze, die sich in Axialrichtung der / parallel zur Mittelachse 11 des Rotors 1 (aus der Bildebene heraus) erstrecken) innerhalb der ringförmigen Fixiereinheit befinden. Diese Fortsätze 50, bzw. deren jeweilige Mantelfläche, liegen derart an der inneren Mantelfläche der ringförmigen Fixiereinheit 20 an, dass sie bei einer auf die Rotormagnete 2 wirkenden Fliehkraft gegen diese innere Mantelfläche gedrückt werden. Da die Fixiereinheit 20 fest auf der Deckfläche 400 des Rotors 1 angebracht ist, können sich die Rotormagnete 2 nicht in Richtung der Fliehkraft bewegen und werden so in der jeweiligen Ausnehmung 200 gehalten. Dies verhindert ein Loslösen der Rotormagnete 2, welches im Stand der Technik, insbesondere bei hohen Drehzahlen, auftreten kann. Rein beispielhaft kann ein jeweiliger Rotormagnet 2 ca. 300 Gramm wiegen. Bei einer Drehzahl des Rotors 1 von 8000 U/min kann somit ein jeweiliger Rotormagnet 2 einer Fliehkraft von etwa einer Tonne unterliegen.

Es soll darauf hingewiesen werden, dass die elektrische oder elektronische Schaltung 14, 21 des erfindungsgemässen Elektromotors für die elektrische Kommutierung in den exemplarischen Figuren lediglich als "Black Box" dargestellt ist. Die erforderliche Funktion kann durch diverse Ausführungsformen von Schaltungen bezweckt werden. Beispielsweise kann die Schaltung mittels MOSFET-Transistoren umgesetzt werden.

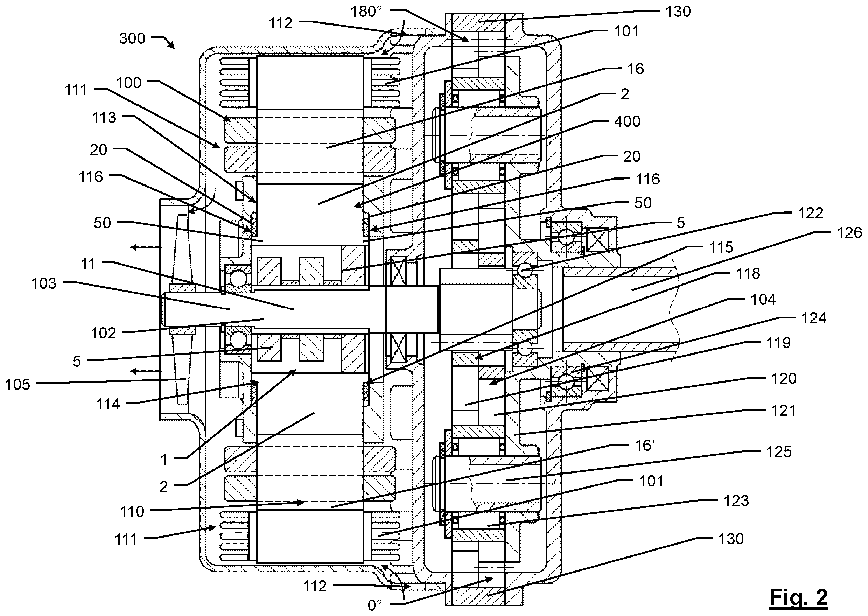

Die **Figur 2** zeigt eine schematische Darstellung einer exemplarischen Ausführungsform der erfindungsgemässen Antriebseinheit 300. Bei der gezeigten Darstellung handelt es sich um eine Draufsicht auf eine Längsschnittfläche eines Längsschnitts durch die Antriebseinheit 300. Durch einen sich entlang der Mittelachse 11 des Rotors 1 von der Grundfläche bis zur Deckfläche des Rotors 1 erstreckenden Hohlraum ist eine als Zahnwelle ausgebildete Rotationsaufnahmeeinheit 102 geführt. Der Hohlraum des Rotors 1 weist dabei als Zahnnabe ausgebildete mechanische Halteelemente auf, die mit der Zahnwelle zusammenwirken. Wird nun der Rotor 1 durch die zuvor beschriebene Funktion des Elektromotors 100 rotiert / angetrieben, so wird die Zahnwelle 102 um eine koaxial zur Mittelachse 11 verlaufende ersten Rotationsachse 103 mitrotiert.

Die in **Figur 2** gezeigte Längsschnittfläche verdeutlicht, dass sowohl an der Grundfläche 113 als auch an der Deckfläche 400 der Rotomagnete 2 eine ringförmige Fixiereinheit 20 angeordnet ist. Weiterhin wird durch den Längsschnitt durch die Rotormagnete 2 ersichtlich, dass die Rotormagnete 2 sich von der Grundfläche 113 bzw. der Deckfläche 400 parallel zur Mittelachse 11 erstreckende axiale Fortsätze / Erhöhungen 50 haben. Diese Fortsätze 50 erheben sich in einem zur Mittelachse 11 zugewandten Bereich der Grundfläche 113 bzw. der Deckfläche 400 der Rotormagnete 2, so dass eine Seitenfläche / Mantelfläche 114 der jeweiligen Fortsätze 20 an einer inneren Mantelfläche 115 der Fixierringe 20 anliegen. So werden die Rotormagnete 2 auch bei hohen Fliehkräften in Position gehalten. Optional kann ein jeweiliger Fixierring 20 aus (hochfestem) Stahl gefertigt sein.

Die der Grundfläche 113 bzw. der Deckfläche 400 der Rotormagnete 2 abgewandte Seite der Fixierringe 20 weist eine Gleitschicht 116 auf, wodurch der Rotor 1 selbst bei einem physischen Kontakt mit dem den Rotor 1 und Stator 110 in Position haltenden Motorgehäuse 117 möglichst ohne Reibungsverluste rotieren kann. Weiterhin wird ersichtlich, dass der Rotor drei in Richtung der Mittelachse 11 axial versetzte Magnetübertragungseinheiten 5 aufweist.

Entsprechend der in **Figur 2** gezeigten Ansicht der Antriebseinheit 300 ist links / auf der dem Exzentergetriebe gegenüberliegenden Seite an der Zahnwelle 102 die als Kühlpropeller ausgebildete zweite Kühleinheit 105 angeordnet. Der Kühlpropeller 105 wird bei einer Rotation der Zahnwelle 102 mitrotiert, wodurch die Luft aus dem Motorraum 111 zur Antriebsbatterie des Elektromotors 100 abgeführt wird. Dadurch, dass der Motorraum die Lufteinlässe / Lüftungsschlitze 112 aufweist, durch die frische / unerwärmte Luft in den Motorraum 111 einströmen kann, wird so ein Luftzug durch den Motorraum 111 erzeugt, der den Elektromotor 100 permanent "umspült" und so (immersiv) abkühlt. Da sich die Luft im Motorraum 111 aufgrund des kontinuierlichen Luftstroms durch den Motorraum 111 nicht über eine bestimmte Temperatur hinaus erwärmt, kann diese vom Kühlpropeller 105 zur Antriebsbatterie geleitete Luft dennoch zur (immersiven) Kühlung der Antriebsbatterie beitragen.

An den in **Figur 2** sichtbaren Statormagneten 16, 16' des Elektromotors 100 ist jeweils eine erste Kühleinheit 101 angeordnet, wobei die erste Kühleinheit als eine Vielzahl an Kühlrippen 101 ausgebildet ist, die an die Statormagnete 16, 16' abgegebene Reibungswärme und/oder Verlustwärme der Spulen der Statormagnete 16, 16' von den Statormagneten 16, 16' an die Luft des Motorraums 111 abführen. Diese durch die von den Kühlrippen abgegebene Wärme erwärmte Luft kann dann durch den zuvor beschriebenen Luftstrom aus dem Motorraum 111 transportiert werden.

Entsprechend der in **Figur 2** gezeigten Ansicht der Antriebseinheit 300 ist rechts / auf der dem Kühlpropeller 105 gegenüberliegenden Seite an der Zahnwelle 102 das Exzentergetriebe 104 angeordnet. Das Exzentergetriebe 104 (z.B. aus Carbon) ist dabei entlang einer senkrecht zur Rotationsachse 103 verlaufenden Schnittfläche 118 in zwei Teile / zwei Exzenterplatten / zwei Exzenterscheiben 119, 120 mit halber Breite aufgespalten. Damit reduziert sich die Fliehkraft der Kurvenscheiben / Exzenterplatten / Exzenterscheiben 119, 120 auf die Hälfte und gleichzeitig verbessert sich die Kraftübertragung von den Exzentern 119, 120 auf die Rollenscheibe 121 symmetrisch mit der Wirkung, dass die zentralen Kugellager 122 auf fast Null entlastet werden. Dasselbe geschieht mit den Nadellagern 123 auf der Cyclogetriebe-Seite. Diese Entlastung führt bei den Wälzlagern 124 zu einer wesentlichen Erhöhung der nominellen Lebensdauer des Getriebes 104. Um die durch Reibung zwischen den Rollen 125 der Rollenscheibe 121 des Exzentergetriebes 104 verursachte Wärmebildung bei hohen Drehzahlen zu reduzieren, besteht die Möglichkeit keine vollrolligen Lager sondern Käfiglager zu verwenden. Durch die axiale Teilung der Exzenterplatten 119, 120 des Getriebes 104 ist die Lagerkraft dieser Rollen 125 sehr stark reduziert, sodass die Lebensdauer dieser Käfiglager vollständig ausreicht. Über dieses Exzentergetriebe 104 kann die vom Elektromotor 100 bereitgestellte Bewegungsenergie möglichst effizient an die Propellerwelle 126 übertragen werden.

In einer alternativen Ausführungsform weist die Antriebseinheit 300 keine Propellerwelle 126 auf. Somit können auch keine Torsionsschwingungen zwischen Propeller 303 und Getriebe 104 entstehen. Dies ermöglicht eine hohe Beschleunigung des Luftfahrzeugs 307 beim Senkrechtstart. Bei der besagten Ausführungsform kann bei einer Drehzahl von 470 Umdrehungen pro Minute (U/min) pro Propeller 303 ein Luftstrom von 170 Kubikmeter pro Sekunde (cbm/s) entstehen. Dies bedingt ein sehr hohes Drehmoment zwischen dem Doppelexzentergetriebe 104 und dem Propeller 303. Bei dieser exemplarischen Ausführungsform ist der Propeller 303 direkt am Getriebe 104, insbesondere direkt an der Rollenscheibe 121, befestigt und der Motor 100 direkt am Propellerrohr. Mit anderen Worten ist die Antriebseinheit 300 zwischen dem Propellerrohr und dem Propeller 303 angeordnet.

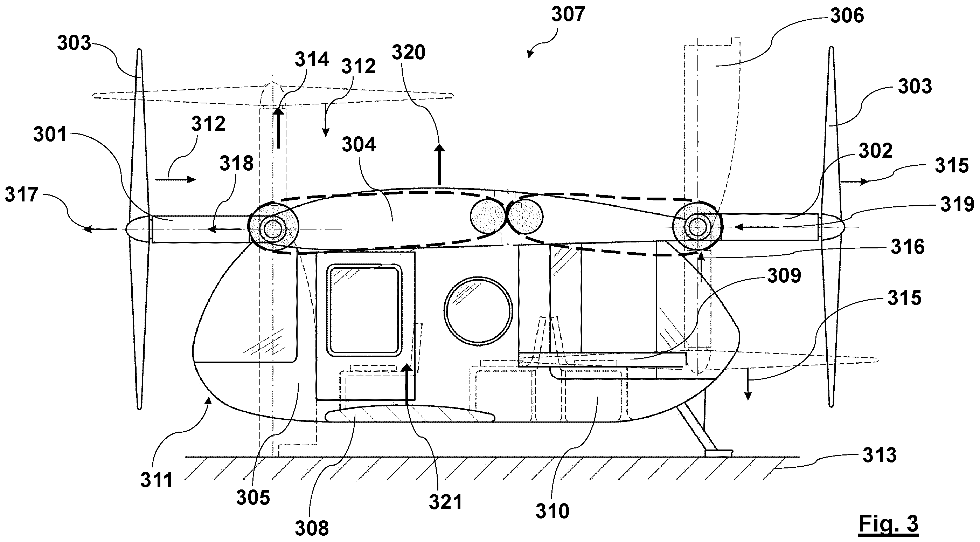

Die **Figur 3** zeigt eine Seitenansicht einer exemplarischen Ausführungsform des erfindungsgemässen Luftfahrzeugs. Für den Waagrechtflug/Horizontalflug sind die Tragflügelteile 301, 302 bündig eingefahren (gezeichnet mit durchgezogenen Linien). Der erste Tragflügelteil 301 wird für den Senkrechtstart/-flug so ausgeschwenkt, dass der Propeller 303 oberhalb des Tragflügels 304 rotiert, während der gegenüberliegende Grossteil 305 des ersten Tragflügelteils 301 unterhalb des Tragflügels 304 vorliegt (gezeichnet mit gestrichelten Linien). Beim zweiten Tragflügelteil 302 ist es genau entgegengesetzt, wobei hier der Propeller 303 unterhalb des Tragflügels 304 rotiert und der gegenüberliegende Grossteil 306 des Tragflügelteils 302 oberhalb des Tragflügels 304 vorliegt.

Weiterhin weist die gezeigte Ausführungsform des Luftfahrzeugs 307 einen Hilfsflügel 308 und einen Berührschutz 309 auf. Der Hilfsflügel 308 ist dabei in einem unteren Bereich seitlich an der Transportkabine 310 angeordnet, also an einem unteren Bereich der Längsseite der Transportkabine 310, wobei der Hilfsflügel 308 dafür sorgt, dass insbesondere beim Waagrechtflug ein geschwindigkeitsproportionales Gegenmoment erzeugt wird, mittels welchem ein, insbesondere durch die Transportkabine 310 und/oder den Berührschutz 309 erhöhter, Luftwiderstand des Luftfahrzeugs 307 ausgeglichen wird, wodurch eine Nickbewegung einer Front 311 des Luftfahrzeugs 307, insbesondere beim Waagrechtflug, verhindert wird und so eine Stabilisierung der Flugeigenschaften des Luftfahrzeugs 307 erreicht wird. Der Berührschutz 309 ist an der Unterseite des Tragflügels 304 angeordnet und erstreckt sich davon ausgehend mit einer Trägerstruktur/Halterung in etwa genau so weit in Richtung des Bodens wie das zweite Tragflügelteil 302. An dem dem Boden zugewandten Ende der Halterung des Berührschutzes 309 ist eine sich waagrecht, insbesondere halbkreisförmig um den im ausgeschwenkten Zustand unterhalb des Tragflügels 304 vorliegenden Propeller 303 des zweiten Tragflügelteils 302, erstreckende Schutzwand angeordnet (der Berührschutz hat bei seitlicher Betrachtung somit eine Form, die vergleichbar mit dem Buchstaben L ist), die den Propeller 303 vor einer physischen Berührung von einem Bereich ausserhalb des Berührschutzes 309 abschirmt, unter anderem um so ein gefahrloses Ein- und Aussteigen der Passagiere zu ermöglichen.

Da die Gewichtsreduktion gerade bei Luftfahrzeugen eine grosse Rolle spielt, um so zum einen überhaupt eine Flugfähigkeit sicherstellen zu können und zum anderen die Energieeffizienz beim Flug optimieren zu können (z.B. ist aufgrund eines verringerten Gewichts des Luftfahrzeugs der Kraftstoffverbrauch ebenfalls verringert), können die oben genannten Bauteile in einer exemplarischen Ausführungsform des gezeigten Luftfahrzeugs 307 zumindest überwiegend aus mindestens einem Leichtbaumaterial, insbesondere Carbon, vorzugsweise glasfaserverstärktes Carbon, Kevlar, Titan und/oder Aluminium ausgestaltet sein.

Insbesondere durch die Verwendung der erfindungsgemässen Antriebseinheit zum Antreiben der Propeller, weist die entsprechende Ausführungsform des erfindungsgemässen Luftfahrzeugs 307 unter anderem die folgenden weiteren Vorteile gegenüber Luftfahrzeugen aus dem Stand der Technik auf:
- Erhöhte Effizienz (z.B. verbesserte Energieübertragung von den Propellermotoren auf die Propeller durch Verwendung von effizienten, verschleiss- und reibungsarmen, langlebigen Exzentergetrieben),
- Erhöhte Fluggeschwindigkeit (z.B. durch verbesserte Übersetzungs- bzw. Untersetzungsverhältnisse in dem als Exzentergetriebe ausgestalteten Getriebe der Antriebseinheit),
- Grössere Reichweite (z.B. durch einen verringerten Energieverbrauch aufgrund der effizienten Antriebseinheit),
- Reduktion der Emissionen (z.B. durch die Verwendung von Elektromotoren (rein elektrischer Betrieb) und/oder den generell verringerten Energieverbrauch),
- Geräuscharmer Betrieb (z.B. durch die Elektromotoren),
- Weniger Wartungsintensiv (z.B. durch langlebige Exzentergetriebe und/oder den vereinfachten Austausch von leeren oder kaputten Batterien aufgrund der einfachen Zugänglichkeit der Batterien)
- Umweltfreundlicherer Betrieb (z.B. durch reduzierten Kraftstoffverbrauch, leiserer Betrieb, verringerte Emissionen, etc.).

Der Übergang vom Senkrecht- zum Waagerechtflug ist zweifellos die komplexeste und im Hinblick auf die Flugsicherheit kritischste Phase eines solchen Luftfahrzeugs 307. Hier sind die aerodynamischen Kräfte aufgeteilt in solche aus den Propellerrotoren 303 und solche aus den feststehenden Tragflügel 304. Zugleich sind sie aufgeteilt in senkrechte und waagrechte Kraftkomponenten. Außerdem haben die Luftströme unterschiedliche Geschwindigkeitsrichtungen, sodass die aerodynamischen Kräfte nicht mehr in ihrer Wirkung eindeutig sind. Deshalb werden diese Verhältnisse auf dem Prüfstand im Windkanal im Vorhinein ermittelt und bei der Steuerung des Luftfahrzeugs 1 berücksichtigt.

Die in **Figur 3** eingezeichneten Pfeile verdeutlichen die Richtungen der beim Waagrechtflug bzw. beim Senkrechtflug auftretenden Luftströme und der dementsprechend wirkenden Kräfte. Beim Senkrechtflug weist der über dem Tragflügel 304 rotierende Propeller 303 des ersten Tragflügelteils 301 eine derartige Drehrichtung auf (beispielsweise im Uhrzeigersinn), dass der Luftstrom 312 in Richtung des Bodens 313 gerichtet ist. Die Auftriebskraft 314 wirkt bei diesem Propeller dem Luftstrom 312 entgegen, also in eine Richtung vom Boden 313 weg. Der unter dem Tragflügel 304 rotierende Propeller 303 des zweiten Tragflügelteils 302 weist die gleiche Drehrichtung auf (also beispielsweise ebenfalls im Uhrzeigersinn), sodass der Luftstrom 315 ebenfalls in Richtung des Bodens 313 gerichtet ist, weshalb auch bei diesem Propeller 303 die Auftriebskraft 316 in eine Richtung vom Boden 313 weg wirkt. Dadurch, dass die beiden Auftriebskräfte 314 und 316 jeweils senkrecht nach oben (vom Boden 313 weg) zeigen, wird ein senkrechtes Abheben des Luftfahrzeugs 307 ermöglicht.

Dadurch, dass der Propeller 303 des zweiten Tragflügelteils 302 beim erfindungsgemässen Luftfahrzeug 307 unterhalb des Tragflügels 304 rotiert, verlaufen beim Übergang vom Senkrechtflug in den Waagrechtflug und dementsprechend beim Einschwenken des ersten und des zweiten Tragflügelteils 301, 302 die Luftströme 312 und 315 auch weiterhin in die gleiche Richtung (entgegen der Flugrichtung 317), weshalb auch bei beiden Propellern 303 die Antriebskräfte (Vortrieb) 318 und 319 in die gleiche Richtung (in Flugrichtung 317) wirken. Folglich ist eine Umkehrung der Drehrichtung oder eine Änderung des Blatteinstellwinkels (z.B. mittels einer Pitchregelung) des Propellers 303 des zweiten Tragflügelteils 302 beim erfindungsgemässen Luftfahrzeug 307 nicht mehr nötig. Dies ermöglicht einen gegenüber Luftfahrzeugen aus dem Stand der Technik vereinfachten und zugleich weniger störanfälligen Übergang vom Senkrechtflug (Vertikalflug) in den Waagrechtflug (Horizontalflug) und umgekehrt. Aufgrund der Form des Tragflügels 304 und/oder des Hilfsflügels 308 erfährt das Luftfahrzeug 1 auch beim Waagrechtflug durch die entsprechenden Flügel eine jeweilige Auftriebskraft 320, 321, die jeweils senkrecht nach oben (vom Boden 313 weg) wirkt und somit auch beim Waagrechtflug des Luftfahrzeugs 307 ein weiteres Aufsteigen ermöglicht.

Mit anderen Worten ergibt sich die statische Tragkraft aus der Anordnung der vier Vertikalpropeller 303 mit sehr grossem Durchmesser (z.B. 3 m). Zwei Propeller 303 liegen über den Tragflächen, bevorzugt sind das die Frontpropeller. Sie sind gegenläufig zum Momentausgleich und haben eine wirksame Fläche von 7.07 [qm]. Bei einer Drehzahl von 520 [D/min] erzeugt jede der beiden Propeller 303 bei stehender Luft einen Auftrieb 314, 316 von einem Viertel des maximalen Gewichts des Luftfahrzeugs 307 durch ihren Luftstrom 312, 315 nach unten.

Dieser Luftstrom hat einen ungehinderten freien Durchgang durch die grossen Öffnungen in den Tragflächen 304, die durch die Tragflügelteile 301 freigegeben werden. Weitere zwei Propeller 303 sind unter den Tragflächen 304 angeordnet und erzeugen bei gleicher Grösse und Drehzahl ebenfalls den gleichen ungehinderten Luftstrom nach unten und somit die gleiche Tragkraft wie die Frontpropeller. Jeder Propeller 303 übernimmt somit ein Viertel des Gesamtgewichts.

Jeder Propeller 303 ist bezüglich seiner Drehzahl und seines Einstellwinkels individuell regelbar und somit auch der jeweilige Luftstrom 312, 315. Dadurch kann das Luftfahrzeug 307 sowohl seitlich als auch in Flugrichtung 317 stets stabil gehalten werden. Alle diese Propeller 303 sind gegenläufig zum Drehmomentausgleich, sodass keine zusätzlichen Ausgleichpropeller notwendig sind wie bei den Helikoptern. Auch bei stürmischem Wetter kann das Luftfahrzeug 307 im Vertikalflug stets verhältnismäßig ruhig gehalten werden.

Dadurch, dass die verhältnismäßig grossflächigen Propeller 303 nur teilweise im Bereich des freien Raums (z.B. der Bereich hinter dem Luftfahrzeug) gehalten werden, ist der Platzbedarf beim Parken kleiner und bei engen Verhältnissen zwischen den Gebäuden sehr gering (z.B. nur etwa 50 [qm]). Gerade in engen Häuserfluchten besteht die Gefahr, dass das Luftfahrzeug 307 durch plötzliche starke Seitenwinde an eine Hauswand gedrückt wird. In einem solchen Fall ist es wichtig, dass der Pilot stets dafür sorgt, dass die Passagierkabine immer parallel zu den Häuserwänden steht, damit die Propeller nicht beschädigt werden. Dies ist möglich durch Trimmen der Ausgleichsmomente der gegenläufigen Propeller 303.

Mit anderen Worten liegen die Propellerachsen genau in der Sehne der schwenkbaren Tiltflügel-Teile 301, 302, die mittels eines scharnierartigen Gelenks im Bereich der Tragflügel 304 gelagert sind. Zum Steigflug werden diese Tragflügel-Teile 301, 302 aus der senkrechten Stellung über einen fortschreitenden Winkel in Richtung horizontale Lage geschwenkt. Dabei dreht sich der Luftstrom der Propeller 303, sodass sich dessen Kraftvektor aufteilt in einen noch verbleibenden senkrechten Anteil und zunehmenden horizontalen Anteil. Damit wegen des kleiner werdenden senkrechten Anteils das Flugzeug 307 nicht an Höhe verliert, ist eine Erhöhung der Propellerdrehzahl notwendig. Mit zunehmender Horizontallage des Propellers 303 steigt die Fluggeschwindigkeit und somit die Tragkraft der Tragflügel 304, zumal sich auch deren Öffnungen geschlossen haben. Die Drehzahlsteigerung muss wegen der ansteigenden Fortschrittsgeschwindigkeit des Flugzeugs 307 dennoch fortgesetzt werden.

Im Horizontalflug wird eine Endgeschwindigkeit von 120 [km/h] angestrebt. Der Luftwiderstand der Tragflügel 304 und der Kabine 310 erfordert bei dieser Geschwindigkeit eine Antriebsleistung von ca. 12 [KW]. Da die Propeller 303 ohne Pitchverstellung der Propellerflügel funktionieren, muss die Drehzahl der hohen Fortschrittsgeschwindigkeit mit einem Zuschlag des Leistungsbedarfs angepasst werden. Dieser muss dem Gütegrad des Propellers entsprechen.

Mit anderen Worten und rein beispielhaft können die Propeller 303 deshalb mit bevorzugt 3 Meter Durchmesser dimensioniert werden, weil es sich bei dieser Ausführungsform des Luftfahrzeugs 307 um einen Hochdecker handelt. Das Cockpit 310 liegt unterhalb der Tragflächen 304 und die Propellerachsen sitzen genau in der Sehne der Tragflügel 304. Beim Start am Boden befinden sich die Tragflügel 304 ca. 1.6 bis 1.7 Meter über dem Boden, sodass genügend Abstand zum Boden für den Radius der Propeller zur Verfügung steht. Diese grossen und somit langsamen Propeller sorgen unter anderem dafür, dass diese Ausführungsform des Luftfahrzeugs 307 sowohl beim Senkrecht- als auch beim Waagrechtflug sehr leise ist.

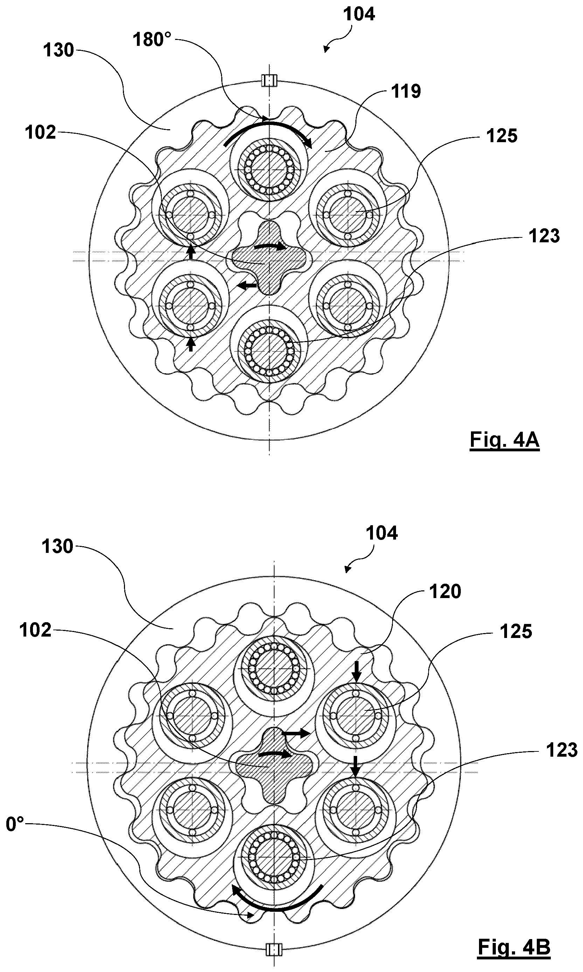

Die **Figuren 4A** und **4B** zeigen schematische Darstellungen der Exzenterplatten 119, 120 des Exzentergetriebes 104 einer exemplarischen Ausführungsform der erfindungsgemässen Antriebseinheit 300. Die beiden insbesondere aus glasfaserverstärktem Carbon bestehenden Exzenterplatten / Exzenterscheiben 119, 120 sind identisch ausgebildet. Die Exzenterscheibe 120 liegt bei dem in Figur 2 gezeigten Zustand des Getriebes 104 bei Null Grad und die Exzenterscheibe 119 bei 180 Grad vor, wobei jeweils ein Teil der Exzenterscheibe 119, 120 mit der Innenverzahnung des Hohlrades 130 im Eingriff ist. Beide Exzenterscheiben 119, 120 führen eine "Hula-hoop- Bewegung" innerhalb der Innenverzahnung des Hohlrades 130 aus. Die Zahnzahldifferenz zwischen der Hohlrad-Innenverzahnung und der Aussenverzahnung der Exzenterscheiben 119, 120 ist 1. Die Zahnform aller drei Räder 119, 120, 130 ist eine sogenannte Ovalverzahnung, deren Zahnformen aus stufenlos ineinander gehenden Epi- und Hypozykloiden bestehen. Die beiden Exzenterscheiben 119, 120 drehen genau miteinander mit der gleichen Drehzahl und Drehrichtung mit nur einem Zehntel (1/10) der Motorwellen-Drehzahl und haben dementsprechend das 10-fache Drehmoment des Motors 100. Dieses Drehmoment ist notwendig für die grossen Propeller 303 des Luftfahrzeugs 307 (z.B. mit einem Durchmesser von 3 Meter).

Durch den Winkelversatz von 180 Grad üben die beiden Exzenterscheiben 119, 120 in der radialen Bewegungsrichtung eine "Strampelbewegung" aus. Die Frequenz dieser Strampelbewegung entspricht der Motordrehzahl, also der 10-fachen der Exzenterplattendrehzahl. Das Verhalten der beiden Exzenterscheiben 119, 120 lässt sich zum Beispiel mathematisch, insbesondere mittels der Superpositionsmethode nachweisen.

Der Vorteil der 180-Grad Verdrehung der Exzenterscheiben 119, 120 ist, dass die Fliehkräfte (durch die Exzentrizität der Bewegung) sich vollständig aufheben, sodass ihre Eingriffskraft gegen das Hohlrad 130 nahezu Null ist. Das heisst, dass die Kräfte auf ihre Umgebung ebenso Null sind (schwingungsfrei).

Ein weiterer Vorteil ist, dass die drehmomentbedingten Eingriffskräfte von den Exzenterplatten 119, 120 auf die Rollen 125 und somit auf die Nadellager 123 entgegengesetzt sind und sich ebenfalls aufheben. Das führt zu einer beträchtlichen Erhöhung der nominellen Lebensdauer bei den Nadellagern 123 des Getriebes 104.

Ein weiterer Vorteil ist, dass die Zahnumfangskräfte des zentralen Wellenzahnrades 102 mit vier Zähnen sich ebenfalls entgegenstehen und sich dadurch gegenseitig aufheben. Dadurch sind die Kugellager 122 auf der Zahnwelle 102 stark entlastet, sodass sich auch hier die nominelle Lebensdauer erhöht.

Es versteht sich, dass diese dargestellten Figuren nur mögliche Ausführungsbeispiele schematisch darstellen. Die verschiedenen Ansätze können ebenso miteinander sowie mit Verfahren des Stands der Technik kombiniert werden.

## Patentansprüche

1. Antriebseinheit (300) für einen Propeller (303) eines zum Vertikalflug und zum Horizontalflug geeigneten Luftfahrzeugs (307), wobei die Antriebseinheit (300) einen ersten Elektromotor (100) ausgebildet zur Rotation des Propellers (303) und ein erstes Exzentergetriebe (104) zur Wirkverbindung zwischen dem Propeller (303) und dem ersten Elektromotor (100) aufweist, wobei der erste Elektromotor (100) einen zylinderförmigen Rotor (1) aufweist, wobei eine Mantelfläche des Rotors (1) mindestens ein erstes Paar von Ausnehmungen aufweist, wobei
• sich eine erste und eine zweite Ausnehmung (200) des ersten Paars von Ausnehmungen jeweils von einer Deckfläche zu einer Grundfläche des Rotors (1) parallel zu einer Mittelachse (11) des Rotors (1) erstrecken; und
• in der ersten Ausnehmung (200) des ersten Paars von Ausnehmungen ein als Nordpol ausgebildeter erster Rotormagnet (2) passgenau angeordnet ist und in der zweiten Ausnehmung (200) des ersten Paars von Ausnehmungen ein als Südpol ausgebildeter zweiter Rotormagnet (2) passgenau angeordnet ist,
**dadurch gekennzeichnet, dass**
auf einer jeweiligen Grundfläche (113) und/oder einer jeweiligen Deckfläche (400) des ersten Rotormagnets (2) und des zweiten Rotormagnets (2) eine Fixiereinheit (20) angeordnet ist, dazu ausgebildet, insbesondere durch Entgegenwirken gegen auf den ersten Rotormagnet (2) und den zweiten Rotormagnet (2) wirkende Fliehkräfte, den ersten Rotormagnet (2) in der ersten Ausnehmung (200) und den zweiten Rotormagnet (2) in der zweiten Ausnehmung (200) zu fixieren.

2. Antriebseinheit (300) gemäss Anspruch 1, wobei der Elektromotor (100) einen Stator (110) aufweist, wobei
• der Stator (110) ein erstes und ein zweites Statormagnetpaar aufweist, wobei
∘ die Statormagnete des ersten Statormagnetpaars (15, 15') gegenüberliegend an dem Rotor angeordnet sind, und
∘ die Statormagnete des zweiten Statormagnetpaars (16, 16') gegenüberliegend an dem Rotor und um 90 Grad versetzt zum ersten Statormagnetpaar (15, 15') angeordnet sind,
• die jeweiligen Statormagnete (15, 15', 16, 16') U-förmig ausgebildet sind,
• jeweils ein Schenkel (17) eines jeweiligen U-förmigen Statormagneten (15, 15', 16, 16')
∘ an den Rotor (1) angeformt ist, und
∘ eine Spule (18) aufweist, dazu vorgesehen, mit elektrischem Strom durchflossen zu werden und dadurch ein Magnetfeld in dem jeweiligen Schenkel (17) zu erzeugen,
• ein jeweiliger Statormagnet (15, 15', 16, 16') derart ausgebildet ist, dass wenn ein elektrischer Strom durch die zwei Spulen (18) des jeweiligen Statormagneten (15, 15', 16, 16') fliesst, ein Schenkel (17) des jeweiligen Statormagneten (15, 15', 16, 16') als Nordpol und der andere Schenkel (17) als Südpol ausgebildet ist, wodurch ein als Nordpol ausgebildeter Rotormagnet (2) von dem als Südpol ausgebildeten Schenkel (17) und ein als Südpol ausgebildeter Rotormagnet (2) von dem als Nordpol ausgebildeten Schenkel (17) des jeweiligen Statormagneten (15, 15', 16, 16') derart angezogen wird, dass der Rotor (1) um eine koaxial zur Mittelachse (11) des Rotors (1) verlaufenen ersten Rotationsachse (103) gedreht wird,
• die Spulen (18) der Statormagnete des ersten Statormagnetpaars (15, 15') über eine erste elektrische oder elektronische Schaltung (14) miteinander verbunden sind, und
• die Spulen (18) der Statormagnete des zweiten Statormagnetpaars (16, 16') über eine zweite elektrische oder elektronische Schaltung (21) miteinander verbunden sind.

3. Antriebseinheit (300) gemäss Anspruch 2, wobei eine erste Magnetflussübertragungseinheit (5), insbesondere eine erste Weicheisenbrücke, derart angeordnet ist, dass, wenn der erste Rotormagnet (2) und/oder der zweite Rotormagnet (2) einem durch den Stator (110) des Elektromotors (100) bereitgestelltem Magnetfeld ausgesetzt ist, ein Magnetfluss zwischen dem ersten Rotormagnet (2) und dem zweiten Rotormagnet (2) bereitgestellt wird.

4. Antriebseinheit (300) gemäss Anspruch 2 oder 3, wobei an den Statormagneten des ersten Statormagnetpaars (15, 15') und/oder den Statormagneten des zweiten Statormagnetpaars (16, 16') eine erste Kühleinheit (101), insbesondere aufweisend mehrere Kühlrippen, angeordnet ist, wobei die erste Kühleinheit (101) dazu vorgesehen ist,
• bei einer Rotation des Rotors (1) - um eine koaxial zur Mittelachse (11) des Rotors (1) verlaufenen ersten Rotationsachse - an die Statormagnete des ersten Statormagnetpaars (15, 15') und/oder die Statormagnete des zweiten Statormagnetpaars (16, 16') abgegebene Reibungswärme abzuführen; und/oder
• eine Verlustwärme der Spulen (18) der Statormagnete (15, 15', 16, 16') abzuführen.

5. Antriebseinheit (300) gemäss einem der Ansprüche 2 bis 4, wobei ein jeweiliger Schenkel (17) eines jeweiligen Statormagneten (15, 15', 16, 16') derart an den Rotor (1) angeformt ist, dass zwischen dem jeweiligen Schenkel (17) und dem Rotor (1) ein Abstand im Bereich von 10 µm bis 300 µm, insbesondere im Bereich von 50 µm bis 100 µm, vorliegt.

6. Antriebseinheit (300) gemäss einem der vorhergehenden Ansprüche, wobei innerhalb eines Hohlraums des Rotors (1) mechanische Halteelemente angeordnet sind, welche mit darauf abgestimmten Halteelement-Gegenstücken einer in den Hohlraum des Rotors (1) eingeschobenen Rotationsaufnahmeeinheit (102) derart zusammenwirken, dass bei einer Rotation des Rotors (1) um eine koaxial zur Mittelachse (11) des Rotors (1) verlaufenen ersten Rotationsachse (103) die Rotationsaufnahmeeinheit (102) um die erste Rotationsachse (103) mitrotiert wird.

7. Antriebseinheit (300) gemäss Anspruch 6, wobei
• die Rotationsaufnahmeeinheit (102) derart an dem ersten Exzentergetriebe (104) angeordnet ist, dass bei einer Rotation der Rotationsaufnahmeeinheit (102) das erste Exzentergetriebe (104) mitrotiert wird; und/oder
• an einer dem ersten Exzentergetriebe (104) gegenüberliegenden Seite der Rotationsaufnahmeeinheit (102) eine zweite Kühleinheit (105) angeordnet ist, dazu vorgesehen, eine erste Antriebsbatterie ausgebildet zur Versorgung des Elektromotors (100) mit elektrischer Energie zu kühlen, insbesondere wobei die zweite Kühleinheit (105) als Kühlpropeller ausgebildet ist, so dass bei einer Rotation der Rotationsaufnahmeeinheit (102) der Kühlpropeller (105) mitrotiert wird.

8. Antriebseinheit (300) gemäss einem der vorhergehenden Ansprüche, wobei die Fixiereinheit (20) ringförmig ausgebildet ist und einen derartigen Ringdurchmesser aufweist, dass die auf der jeweiligen Grundfläche (113) und/oder der jeweiligen Deckfläche (400) des ersten Rotormagnets (2) und des zweiten Rotormagnets (2) angeordnete Fixiereinheit (20) über jeweilige axiale Fortsätze (50) des ersten Rotormagnets (2) und des zweiten Rotormagnets (2) auf den ersten Rotormagnet und den zweiten Rotormagnet wirkende Fliehkräfte aufnehmen kann.

9. Antriebseinheit (300) gemäss einem der vorhergehenden Ansprüche, wobei die Fixiereinheit (20) auf die jeweilige Grundfläche (113) und/oder die jeweilige Deckfläche (400) des ersten Rotormagnets (2) und des zweiten Rotormagnets (2) geklebt ist.

10. Antriebseinheit (300) gemäss einem der vorhergehenden Ansprüche, wobei die Fixiereinheit (20) als Axiallager zur Aufnahme von koaxial und/oder parallel zur Mittelachse (11) auf den Rotor (1) wirkenden Kräften ausgebildet ist, insbesondere wobei die Fixiereinheit (20) an ihrer von der jeweiligen Grundfläche (113) und/oder der jeweiligen Deckfläche (400) des ersten Rotormagnets (2) und des zweiten Rotormagnets (2) abgewandten Seite eine Gleitschicht aufweist, insbesondere wobei die Gleitschicht Molybdändisulfid aufweist.

11. Antriebseinheit (300) gemäss einem der vorhergehenden Ansprüche, wobei der Rotor (1) eine Vergussmasse, insbesondere ein Vergussharz, aufweist, insbesondere wobei die Vergussmasse zwischen dem ersten Rotormagnet (2) und/oder dem zweiten Rotormagnet (2) und der ersten Magnetflussübertragungseinheit (2) eingegossen ist.

12. Antriebseinheit (300) gemäss einem der vorhergehenden Ansprüche, wobei das erste Exzentergetriebe (104), insbesondere eine Zykloidenscheibe (119, 120) des ersten Exzentergetriebes (104), ein Leichtbaumaterial, insbesondere Carbon, vorzugsweise glasfaserverstärktes Carbon, Kevlar, Titan und/oder Aluminium aufweist.

13. Luftfahrzeug (307) geeignet zum Vertikalflug und zum Horizontalflug, wobei
• das Luftfahrzeug (307) mindestens einen Tragflügel (304) aufweist;
• der mindestens eine Tragflügel (304) mindestens ein schwenkbares Tragflügelteil (301, 302) aufweist; und
• der mindestens eine schwenkbare Tragflügelteil (301, 302) einen Propeller (303) aufweist, der am Tragflügelteil (301, 302) rotierbar um eine Rotationsachse gelagert ist,
**dadurch gekennzeichnet, dass**
der mindestens eine schwenkbare Tragflügelteil (301, 302) eine Antriebseinheit (300) gemäss einem der Ansprüche 1 bis 12 aufweist.

14. Luftfahrzeug (307) gemäss Anspruch 13, wobei das Luftfahrzeug (307) eine Fallschirmöffnungseinheit aufweist, wobei die Fallschirmöffnungseinheit dazu vorgesehen ist, einen Fallschirm in Reaktion auf ein Steuersignal aus dem Luftfahrzeug (307)auszubringen.

15. Luftfahrzeug (307) gemäss Anspruch 13 oder 14, wobei das mindestens eine schwenkbare Tragflügelteil (301, 302) aufweist
• zumindest eine erste Antriebsbatterie ausgebildet zur Versorgung des Elektromotors (100) mit elektrischer Energie, wobei die erste Antriebsbatterie so im oder am Tragflügelteil (301, 302) angeordnet ist, dass sie dort austauschbar und/oder aufladbar ist,
• eine Kommunikationseinheit ausgebildet zum Empfang von Regelsignalen, insbesondere von Regelsignalen einer externen Sendequelle,
• eine Regeleinheit ausgebildet, jeweils in Abhängigkeit von den Regelsignalen, zum Regeln eines Schwenkwinkels des Tragflügelteils (301, 302) und zum Regeln der Rotation des Propellers (303), und/oder
• zumindest eine auf einer Oberfläche des Tragflügelteils (301, 302) angeordnete photovoltaische Zelle, die mit der ersten Antriebsbatterie verbunden ist und zum Aufladen der ersten Antriebsbatterie ausgebildet ist.
